(19) Europäisches Patentamt
European Patent Office
Office européen des brevets

(11) **EP 1 396 712 B1**

# (12) FASCICULE DE BREVET EUROPEEN

(45) Date de publication et mention
de la délivrance du brevet:
**10.07.2013 Bulletin 2013/28**

(21) Numéro de dépôt: **03292021.7**

(22) Date de dépôt: **12.08.2003**

(51) Int Cl.:
*G01M 11/00* *(2006.01)*     *G01M 11/02* *(2006.01)*

(54) **Procédé et système de réflectométrie à onde optique polarisée (POTDR)**

Verfahren und System zur Reflexionsmessung polarisierter optischer Wellen im Zeitbereich (POTDR)

Method and system for polarisation optical time domain reflectometry (POTDR)

(84) Etats contractants désignés:
**AT BE BG CH CY CZ DE DK EE ES FI FR GB GR HU IE IT LI LU MC NL PT RO SE SI SK TR**

(30) Priorité: **05.09.2002 FR 0210968**

(43) Date de publication de la demande:
**10.03.2004 Bulletin 2004/11**

(73) Titulaire: **Draka Comteq B.V.**
**1083 HJ Amsterdam (NL)**

(72) Inventeurs:
• **Fayolle, Philippe**
**78450 Villepreux (FR)**
• **Lumineau, Yves**
**95220 Herblay (FR)**
• **Bouquet, Grégory**
**75009 Paris (FR)**
• **Durel, Vanessa**
**78700 Conflans Ste Honorine (FR)**

(74) Mandataire: **Blokland, Arie**
**Algemeen Octrooi- en Merkenbureau**
**P.O. Box 645**
**5600 AP Eindhoven (NL)**

(56) Documents cités:
EP-A- 0 681 172     DE-A- 19 825 876
US-B1- 6 229 599

• WUILPART M ET AL: "PMD MEASUREMENT WITH A POLARIZATION-OTDR" ECOC 2002. 28TH. EUROPEAN CONFERENCE ON OPTICAL COMMUNICATION. COPENHAGEN, DENMARK, SEPT. 8 - 12, 2002, EUROPEAN CONFERENCE ON OPTICAL COMMUNICATION.(ECOC), vol. 4 OF 4. CONF. 28, 12 septembre 2002 (2002-09-12), page 933 XP001158413
• HUTTNER B ET AL: "DISTRIBUTED PMD MEASUREMENT WITH A POLARIZATION-OTDR IN OPTICAL FIBERS" JOURNAL OF LIGHTWAVE TECHNOLOGY, IEEE. NEW YORK, US, vol. 17, no. 10, octobre 1999 (1999-10), pages 1843-1848, XP001033243 ISSN: 0733-8724
• GALTAROSSA A ET AL: "SINGLE-END POLARIZATION MODE DISPERSION MEASUREMENT USING BACKREFLECTED SPECTRA THROUGH A LINEAR POLARIZER" JOURNAL OF LIGHTWAVE TECHNOLOGY, IEEE. NEW YORK, US, vol. 17, no. 10, octobre 1999 (1999-10), pages 1835-1842, XP000984134 ISSN: 0733-8724
• KAZUMASA TAKADA ET AL: "HIGH SENSITIVITY AND SUBMILLIMETER RESOLUTION OPTICAL TIME-DOMAIN REFLECTOMETRY BASED ON LOW-COHERENCE INTERFERENCE" JOURNAL OF LIGHTWAVE TECHNOLOGY, IEEE. NEW YORK, US, vol. 10, no. 12, 1 décembre 1992 (1992-12-01), pages 1998-2005, XP000367901 ISSN: 0733-8724
• PATENT ABSTRACTS OF JAPAN vol. 2002, no. 06, 4 juin 2002 (2002-06-04) & JP 2002 048680 A (ANRITSU CORP;KOSEKI TAKESHI), 15 février 2002 (2002-02-15)

• **ROGERS A J: "POLARISATION OPTICAL TIME DOMAIN REFLECTOMETRY" ELECTRONICS LETTERS, IEE STEVENAGE, GB, vol. 16, no. 13, 19 décembre 1980 (1980-12-19), pages 489-490, XP001097960 ISSN: 0013-5194**

**Description**

L'invention concerne le domaine des procédés de réflectométrie à onde optique polarisée (POTDR en terminologie anglo-saxonne pour « polarisation optical time domain reflectometry »). La réflectométrie à onde optique polarisée ou POTDR permet une estimation au moins qualitative du coefficient de dispersion modale de polarisation (PMD pour « polarisation mode dispersion » en terminologie anglo-saxonne) qui est exprimé en ps/km$^{1/2}$ pour les fibres optiques à fort couplage de modes. La POTDR permet en effet de contrôler l'homogénéité de la PMD le long des fibres optiques. Il est ainsi possible de repérer et de sélectionner les bons tronçons d'une fibre optique (c'est-à-dire présentant un faible coefficient de PMD). La biréfringence dans une fibre optique étant à l'origine de la PMD dans ladite fibre optique, l'analyse d'une onde polarisée ayant transitée dans une fibre optique permet d'évaluer qualitativement la biréfringence de ladite fibre optique et par conséquent de remonter à une estimation qualitative de la PMD. La PMD peut être évaluée soit localement, c'est-à-dire sur une portion de la fibre optique à tester, la portion de fibre optique ayant de préférence au moins un km de long, soit globalement, c'est-à-dire sur toute la longueur de la fibre optique à tester. La POTDR étant un signal rétrodiffusé, il suffit d'avoir accès à une seule extrémité de la fibre optique à tester ou du câble comprenant la fibre optique à tester. Il est intéressant que la PMD d'une fibre optique soit homogène, connue et faible.

Selon un art antérieur, décrit par exemple dans l'article « distributed PMD measurement with a polarisation-OTDR in optical fibers» écrit par B. Huttner et publié le 10 Mars 1999 dans la revue «Journal of lightwave technology, 17, 1843-1848, 1999» ou bien dans l'article «single-end polarization mode dispersion measurement using backreflected spectra through a linear polarizer » écrit par Andrea Galtarossa et publié le 10 Octobre 1999 dans la revue « Journal of lightwave technology », il est connu des procédés de réflectométrie à onde optique polarisée. Toutefois, ces procédés sont basés sur l'envoi d'un seul signal optique linéairement polarisé, à partir duquel sont extraits un ou plusieurs paramètres, par exemple DOP (« degree of polarisation ») ou DGD (« differential group delay »), à partir desquels est évaluée la dispersion modale de polarisation. Les procédés proposés peuvent être qualifiés de semi-quantitatifs dans la mesure où d'une part donnant une valeur de coefficient de dispersion modale de polarisation ils représentent une nette amélioration par rapport aux procédés purement qualitatifs et d'autre part leur précision est limitée et insuffisante pour certaines applications.

JP2002048680A divulgue un procédé de réflectométrie à onde optique polarisée comprenant au moins une étape d'envoi, dans une fibre optique à tester, de plusieurs signaux optiques distinctement polarisés (« three kinds of polarization states » en terminologie anglo-saxonne), et une étape de détection, sensible à la polarisation, des traces obtenues par rétrodiffusion des signaux optiques, Le coefficient de dispersion modale de polarisation est calculé.

L'invention propose un procédé de réflectométrie à onde optique polarisée qui est plus précis et peut être considéré comme vraiment quantitatif, au moins sur une plage donnée de dispersions modales de polarisation. Pour cela, le procédé selon l'invention, définie dans la revendication 1, peut notamment utiliser tout ou partie des caractéristiques originales suivantes :

- au lieu d'envoyer un seul signal optique polarisé dans la fibre optique à tester, envoi dans la fibre optique à tester d'au moins deux signaux optiques polarisés présentant entre eux un décalage angulaire déterminé de manière à ce que le coefficient de dispersion modale de polarisation reste indépendant d'une éventuelle rotation de polarisation dans la fibre optique à tester ; choix préférentiel d'un décalage angulaire valant environ 45 degrés entre deux signaux linéairement polarisés ;

L'utilisation de l'ensemble des caractéristiques définie dans la revendication 1 permet au procédé selon l'invention d'être quantitatif avec une très bonne précision sur une plage étendue de valeurs de coefficient de dispersion modale de polarisation. La combinaison des caractéristiques est particulièrement avantageuse et aboutit à un compromis entre précision et complexité particulièrement intéressant.

Selon l'invention, il est prévu un procédé de réflectométrie à onde optique polarisée comprenant successivement au moins :

une étape d'envoi, dans une fibre optique à tester, de plusieurs signaux optiques polarisés et distincts entre eux ;
une étape de détection, sensible à la polarisation, des traces obtenues par rétrodiffusion des signaux optiques;
une étape de normalisation, pour chacune des traces;
une étape de calcul, pour chacune des traces, sur au moins une portion de la fibre optique à tester, de l'écart type de la trace normalisée, le résultat étant appelé bruit relatif de la trace;
une étape de calcul au moyen d'une fonction de type moyenne pondérée entre les bruits relatifs obtenus dans l'étape précédente, l'écart type moyen en résultant étant appelé bruit relatif global
une étape d'estimation du coefficient de dispersion modale de polarisation à partir du bruit relatif global par une fonction de l'étape d'estimation, cette fonction étant constituée d'une combinaison linéaire d'une ou de plusieurs exponentielles de la forme exp$(a+bP+cP^{-1})$, les coeffcients a, b, c étant fixes pour chaque exponentielle mais pouvant varier d'une exponentielle à l'autre, P étant un paramètre scalaire; les représentations des signaux optiques sur la sphère de Poincaré sont indépendants l'un de l'autre, ce qui assurera une valeur constante du bruit relatif global rendant ainsi la précision de l'estimation du coefficient de dispersion modale de polarisation indépendante de la rotation de polarisation que peuvent subir les signaux optiques lors de leur aller-retour dans la fibre optique à tester.

L'invention sera mieux comprise et d'autres particularités et avantages apparaîtront à l'aide de la description ci-après et des dessins joints, donnés à titre d'exemples, où:

- la figure 1 représente schématiquement un exemple de système selon un mode de réalisation préféré de l'invention ;
- la figure 2 représente schématiquement un exemple de trace acquise de l'OTDR de la figure 1 ;
- la figure 3 représente schématiquement un exemple de trace obtenue par rétrodiffusion ;
- la figure 4 représente schématiquement un exemple de trace normalisée ;
- la figure 5 représente schématiquement un exemple de fonction utilisée lors de l'étape d'estimation du coefficient de dispersion modale de polarisation.

L'invention, définie dans la revendication 1, va maintenant être décrite plus en détail selon l'un de ses aspects. Selon un aspect préférentiel de l'invention, le procédé de réflectométrie à onde optique polarisée s'applique à une fibre optique à tester dont on veut connaître le coefficient de dispersion modale de polarisation, notamment pour d'une part vérifier l'homogénéité de la dispersion modale de polarisation dans la fibre optique à tester et d'autre part sélectionner éventuellement les bons tronçons de fibre optique c'est-à-dire les tronçons de fibre optique ayant un faible coefficient de dispersion modale de polarisation. Le procédé comporte une étape d'envoi, dans la fibre optique à tester, de plusieurs signaux optiques linéairement polarisés, de préférence deux. Les signaux optiques présentent entre eux un décalage angulaire déterminé de manière à ce que le bruit relatif global reste indépendant d'une éventuelle rotation de polarisation dans la fibre optique à tester. Les représentations des signaux optiques sur la sphère de Poincarré sont indépendants l'un de l'autre, ce qui assurera une valeur constante du bruit relatif global rendant ainsi la précision de l'estimation du coefficient de dispersion modale de polarisation indépendante de la rotation de polarisation que peuvent subir les signaux optiques lors de leur aller-retour dans la fibre optique à tester. Lors de leur retour, les signaux optiques sont détectés. L'étape de détection des traces obtenues par rétrodiffusion des signaux optiques est sensible à la polarisation, c'est-à-dire par exemple que les signaux optiques qui ont traversé un polariseur à l'aller le retraversent au retour. Une fois acquise, chacune des traces est normalisée de manière à la rendre indépendante de la différence d'atténuation subie par la position des différentes rétrodiffusions du signal le long de la fibre optique à tester et ainsi de manière à ne plus devoir tenir compte de l'affaiblissement en fonction de la longueur de fibre optique parcourue lors de l'aller et retour du signal retrodiffusé. Puis pour chacune des traces, sur une portion de la fibre optique à tester dans le cas d'une estimation de dispersion modale de polarisation locale ou sur toute la fibre optique à tester dans le cas d'une estimation de dispersion modale de polarisation globale, on calcule l'écart type de la trace normalisée, cet écart type étant appelé bruit relatif de la trace. Puis on effectue une fonction de type moyenne pondérée entre les bruits relatifs de ces différentes traces, en accordant le même poids à chacun desdits bruits relatifs, ladite moyenne étant appelée bruit relatif global. Enfin, une étape d'estimation détermine le coefficient de dispersion modale de polarisation à partir du bruit relatif global par l'intermédiare d'une fonction du type à une entrée scalaire et à une sortie scalaire, c'est-à-dire qu'en entrée de ladite fonction on met le bruit relatif global qui est un simple scalaire et que ladite fonction donne en sortie une valeur de coefficient de dispersion modale de polarisation laquelle est également un simple scalaire. Le procédé selon l'invention a l'avantage d'être simple par plusieurs aspects, notamment au niveau des paramètres manipulés, il réduit sans dégradation substantielle l'information contenue dans une trace à un seul paramètre scalaire, et au niveau de la source lumineuse utilisée dont l'impulsion n'a pas besoin d'être très fine notamment comme dans l'un des documents de l'art antérieur.

Le procédé selon l'invention est quantitatif avec une bonne précision sur une plage allant environ de 0,01 ps/km$^{1/2}$ à 0,2ps/km$^{1/2}$, car l'utilisation d'un appareil OTDR standard dans le système selon l'invention ne présente pas assez de sensibilité pour explorer une plage plus importante. Cette plage est toutefois pratiquement très étendue dans la mesure où, les fibres optiques présentant un coefficient de dispersion modale de polarisation inférieur à la borne inférieure de ladite plage peuvent être considérées comme excellentes tandis que les fibres optiques présentant un coefficient de dispersion modale de polarisation supérieur à la borne supérieure de ladite plage peuvent être considérées comme mauvaises. Une fois que la fibre optique a été diagnostiquée comme excellente (les spécifications les plus sévères sont vérifiées) ou comme mauvaise (les spécifications très peu sévères ne sont pas vérifiées), la précision n'est plus nécessaire pour ces cas extrêmes, la précision restant requise pour les cas intermédiaires pour lesquels il s'agit de vérifier si telle ou telle spécification est vérifiée ou non. Depuis longtemps, la valeur et l'homogénéité du coefficient de dispersion modale de polarisation sont des facteurs devenus limitatifs pour la qualité des fibres optiques et constituent un « verrou » que le procédé de réflectométrie à onde optique polarisée quantitative selon l'invention « libère ». La possibilité pour le système selon l'invention mettant en oeuvre le procédé selon l'invention d'utiliser un appareil OTDR standard le rend particulièrement attractif au niveau de son coût. Cela permet également de réaliser de manière concomitante les mesures classiques par OTDR, à savoir longueur, défauts et atténuation.

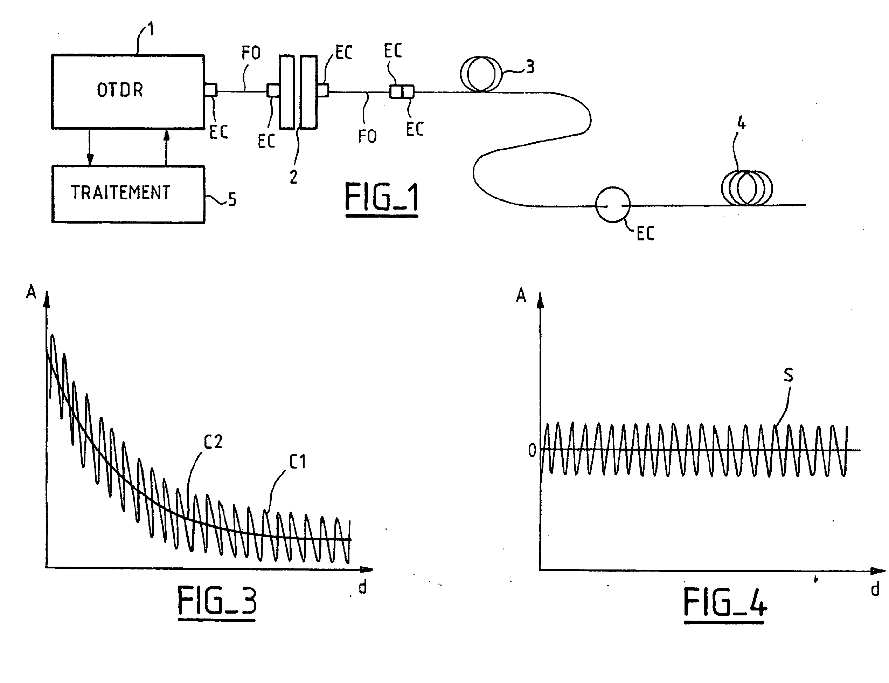

La figure 1 représente schématiquement un exemple de système selon un mode de réalisation préféré de l'invention destiné à mettre en oeuvre le procédé selon l'invention. Des embouts connectorisés sont notés EC et des tronçons de fibre optique entre embouts connectorisés sont notés FO. Le système comprend également en série un réflectomètre optique 1 qui est un dispositif OTDR standard, un contrôleur 2 de polarisation, une fibre optique 3 de référence. Le système comprend de plus un dispositif de traitement 5 relié au dispositif OTDR 1. Le dispositif OTDR 1 standard ne donnant qu'une trace logarithmisée, le dispositif de traitement 5 est notamment chargé de restituer la trace originelle d'allure exponentielle. Le dispositif OTDR 1 standard comporte une source pulsée vers 1550nm, un coupleur, un détecteur et des moyens de traitement, mais il est connu en soi et disponible dans le commerce chez de nombreux constructeurs. Le contrôleur de polarisation 2 est constitué soit d'un polariseur linéaire associé à d'une lame demi-onde tournante si le dispositif OTDR 1 comporte une source lumineuse qui est polarisée soit d'un polariseur tournant si le dispositif OTDR 1 comporte une source lumineuse qui est non polarisée. La fibre optique de référence 3 est une fibre optique amorce dont l'extrémité libre est destinée à être reliée à une fibre optique 4 à tester laquelle n'appartient pas au système proprement dit. Ladite extrémité libre possède alors de préférence un embout connectorisé. Le dispostif de traitement 5 est destiné à permettre, en relation avec les éléments 1 à 4, la mise en oeuvre du procédé de réflectométrie à onde optique polarisée selon l'invention.

La fibre optique de référence 3, en plus d'être une fibre optique amorce constitue aussi un étalon interne pour l'estimation du coefficient de dispersion modale de polarisation, et pour cela, sa longueur tout comme son coefficient de dispersion modale de polarisation de la fibre optique amorce sont connus et utilisés par le système selon l'invention. Afin de présenter une trace qui soit le plus homogène et le plus exploitable possible, la fibre optique de référence 3 présente une dispersion modale de polarisation qui est de préférence constante et homogène. La dispersion modale de polarisation de la fibre optique de référence 3 est préférentiellement comprise entre 0,04 et 0,06 ps/km$^{1/2}$, par exemple 0,05 ps/km$^{1/2}$. Il serait intéressant que la fibre optique de référence 3 soit du même type que les fibres optiques à tester mais cela tout en étant possible nécessiterait tout de même de pouvoir disposer de plusieurs types de fibres optiques de référence 3. La fibre optique de référence 3 présente avantageusement une longueur comprise entre 2 et 4km, par exemple 3km. La fibre optique de référence 3 peut aussi être utilisée dans d'autres systèmes de mise en oeuvre de procédé de réflectométrie à onde optique polarisée que celui de l'invention et peut aussi être utilisé pour la mise en oeuvre d'autres procédés de réflectométrie à onde optique polarisée que celui de l'invention.

Deux signaux optiques sont envoyés successivement par le dispositif OTDR 1 au travers du contrôleur de polarisation 2 pour traverser la fibre optique de référence 3 et la fibre optique à tester 4. Le long des fibres optiques, les signaux optiques sont rétrodiffusés et ces rétrodiffusions repartent vers le dispositif OTDR 1 en retraversant le contrôleur de polarisation 2. Les signaux optiques sont linéairement polarisés et le décalage angulaire entre eux est suffisamment proche de 45 degrés pour que le coefficient de dispersion modale de polarisation estimé reste indépendant d'une éventuelle rotation de polarisation dans la fibre optique à tester. Plus leur décalage angulaire est proche de 45 degrés et mieux c'est, mais une valeur un peu différente peut pour certaines applications ne pas trop dégrader la précision obtenue et être acceptable.

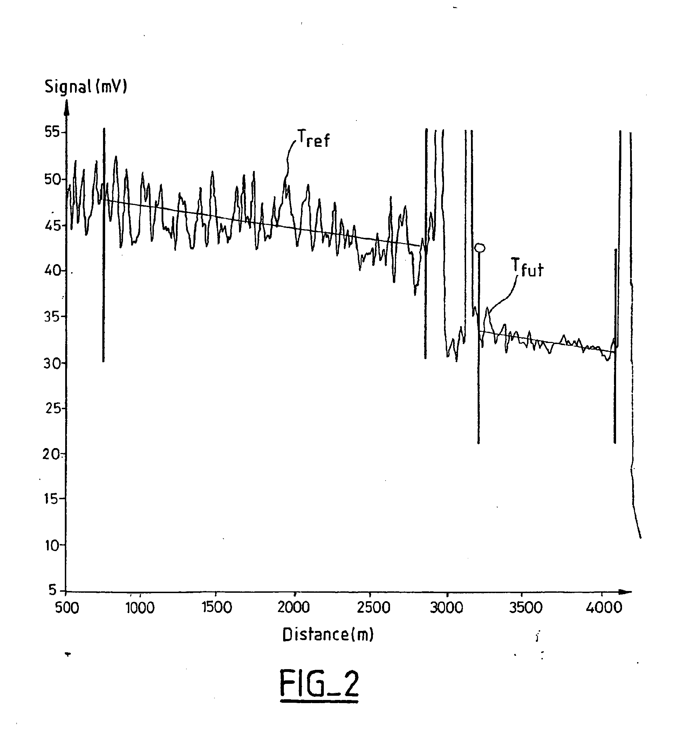

La figure 2 représente schématiquement un exemple de trace acquise de l'OTDR de la figure 1 et traitée par le dispositif de traitement 5, obtenue par rétrodiffusion de l'un des signaux optiques envoyés. La trace étalon correspondant à la fibre optique de référence 3 est notée Tref. La trace correspondant à la fibre optique à tester 4 est notée Tfut. Un OTDR standard délivre généralement une courbe logarithmisée. Mais cette trace, déjà traitée par le dispositif de traitement 5, présente une allure exponentielle (à cause de l'atténuation en fonction de la distance le long de ladite fibre optique), cependant celle-ci ne se voit pas car la trace est représentée sur une distance qui est trop courte. L'intensité du signal optique rétrodiffusé est représentée en ordonnée et exprimée en millivolts tandis qu'en abscisse est représentée la distance au dispositif OTDR 1 laquelle distance est exprimée en mètres.

La figure 3 représente schématiquement un exemple de trace obtenue par rétrodiffusion, tandis que la figure 4 représente schématiquement un exemple de trace normalisée. La courbe C1, d'allure exponentielle, représente la trace obtenue par rétrodiffusion de l'un des signaux optiques. La courbe C2 représente la moindre exponentielle de la courbe C1. La courbe S dont la moyenne est nulle représente la trace normalisée. L'étape de normalisation consiste, à partir de la trace d'allure exponentielle C1, d'une part à déterminer C2 la moindre exponentielle de C1 et d'autre part à déterminer la trace normalisée S=(C1-C2)/C2. L'étape de calcul de l'écart type de la trace normalisée S est réalisée par l'intermédiaire de la formule suivante :

$$\sqrt{\frac{1}{L}\int_0^L S^2\,dl}$$

avec L longueur de la portion de fibre optique à tester 4. Sur les figures 3 et 4, l'amplitude A du signal en ordonnée est exprimée en fonction de la distance d de la rétrodiffusion le long de la fibre optique 4 à tester. Le calcul du bruit relatif global est réalisé par l'intermédiaire d'une fonction de type moyenne pondérée qui est par exemple soit la moyenne arithmétique, soit la moyenne géométrique, soit la moyenne harmonique, soit la racine carrée de la somme des carrés. Dans le cas avantageux d'une fonction de type moyenne arithmétique, soient BR(0°) le bruit relatif de l'une des traces et BR(45°) le bruit relatif de l'autre trace présentant un décalage de 45 degrés avec la première trace. Le bruit relatif global BRG vaut alors BRG=[BR(0°)+BR(45°)]/2. C'est à partir de ce bruit relatif global BRG qu'est déterminé le coefficient de dispersion modale de polarisation appelé cPMD.

La fonction de l'étape d'estimation est une fonction constituée d'une combinaison linéaire d'une ou de plusieurs exponentielles de la forme exp(a+bP+cP$^{-1}$), les coefficients a, b et c étant fixes pour chaque exponentielle mais pouvant varier d'une exponentielle à l'autre, P étant un paramètre scolaire. La fonction de l'étape d'estimation est de préférence de la forme

$$cPMD = \exp\left(A + \frac{B}{BRG}\right)$$

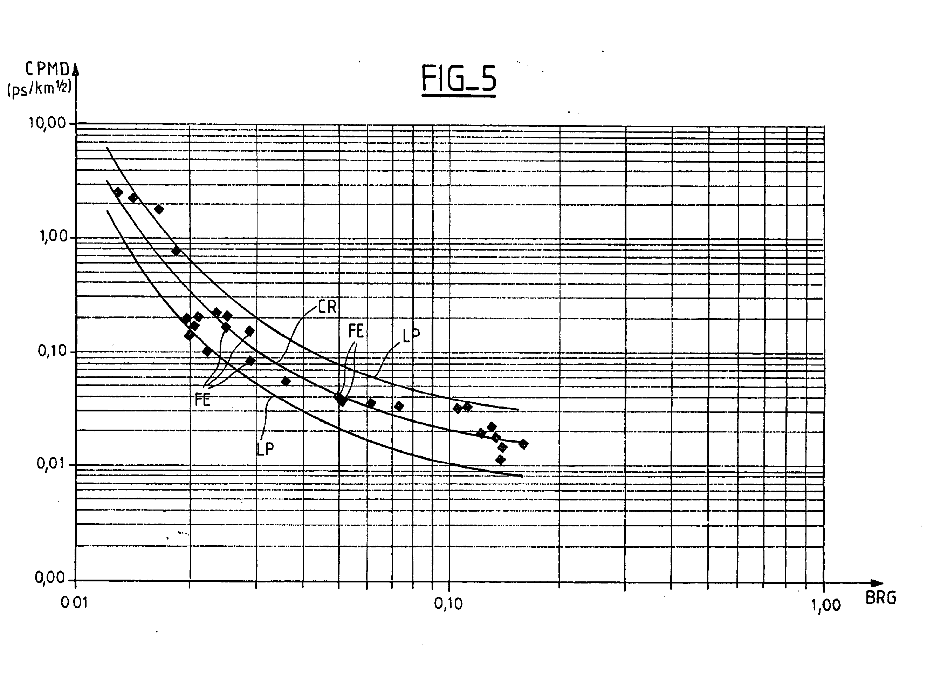

avec BRG bruit relatif global, A coefficient fixe compris entre -6 et -3, B coefficient fixe compris entre 0,001 et 0,2. Par exemple, A vaut -4,365 et B vaut 0,06176, ce qui correspond à la courbe CR de la figure 5.

La figure 5 représente schématiquement un exemple de fonction utilisée lors de l'étape d'estimation du coefficient de dispersion modale de polarisation. Le coefficient de dispersion modale de polarisation cPMD est situé en ordonnée et exprimé en ps/km$^{1/2}$. En abscisse, se trouve le bruit relatif global BRG qui est sans unité. La courbe CR a été déterminée à partir d'un ensemble de fibres étalons FE représentées par des losanges noirs. Les courbes LP représentent les limites de la précision du modèle.

Une autre fonction pour l'étape d'estimation est par exemple

$$cPMD = A\exp\left(\frac{BRG}{B}\right) + A1\exp\left(\frac{BRG}{B1}\right)$$

avec A valant 0,4155 et B valant -0,01286 et A1 valant 0,04596 et B1 valant -0,1970. D'autres fonctions, à base d'exponentielles ou non, sont également possibles dans le cadre des revendications.

## Revendications

1. Procédé de réflectométrie à onde optique polarisée comprenant successivement au moins:

   une étape d'envoi, dans une fibre optique (4) à tester, de plusieurs signaux optiques polarisés et distincts entre eux ;
   une étape de détection, sensible à la polarisation, des traces (T$_{ref}$, T$_{fut}$, C1) obtenues par rétrodiffusion des signaux optiques;
   une étape de normalisation, pour chacune des traces (T$_{ref}$, T$_{fut}$, C1);
   une étape de calcul, pour chacune des traces, sur au moins une portion de la fibre optique à tester, de l'écart type de la trace normalisée (S), le résultat étant appelé bruit relatif de la trace;
   une étape de calcul au moyen d'une fonction de type moyenne pondérée entre les bruits relatifs obtenus dans l'étape précédente, l'écart type moyen en résultant étant appelé bruit relatif global (BRG) ;
   une étape d'estimation du coefficient de dispersion modale de polarisation (cPMD) à partir du bruit relatif global (BRG) par une fonction de l'étape d'estimation, cette fonction étant constituée d'une combinaison linéaire d'une ou de plusieurs exponentielles de la forme exp (a+bP+cP$^{-1}$), les coefficients a, b, c étant fixes pour chaque exponentielle mais pouvant varier d'une exponentielle à l'autre, P étant un paramètre scalaire;
   les représentations des signaux optiques sur la sphère de Poincaré sont indépendants l'un de l'autre, ce qui assurera une valeur constante du bruit relatif global (BRG) rendant ainsi la précision de l'estimation du coefficient de dispersion modale de polarisation (cPMD) indépendante de la rotation de polarisation que peuvent subir les signaux optiques lors de leur aller-retour dans la fibre optique (4) à tester.

2. Procédé de réflectométrie à onde optique polarisée selon la revendication 1, **caractérisé en ce que** les signaux optiques sont au nombre de deux.

3. Procédé de réflectométrie à onde optique polarisée selon la revendication 1 ou 2, **caractérisée en ce que** les signaux optiques sont linéairement polarisés.

4. Procédé de réflectométrie à onde optique polarisée selon la revendication 3, **caractérisé en ce que**:

   les signaux optiques sont au nombre de deux;
   le décalage angulaire entre les deux signaux optiques linéairement polarisés est suffisamment proche de 45 degrés pour que le coefficient de dispersion modale de polarisation (cPMD) estimé reste indépendant d'une éventuelle relation de polarisation dans la fibre optique (4) à tester.

5. Procédé de réflectométrie à onde optique polarisée selon une de la revendications 1-4, **caractérisé en ce que** la fonction de l'étape d'estimation est:

$$\exp\!\left(A+\frac{B}{BRG}\right)$$

avec BRG bruit relatif global, A coefficient fixe compris entre -6 et -3, 8 coefficient fixe compris entre 0,001 et 0,2.

6. Procédé de réflectométrie à onde optique polarisée selon une de la revendications 1-5, **caractérisé en ce que** la fonction de type moyenne pondérée est soit la moyenne arithmétique, soit la moyenne géométrique, soit la racine carrée de la somme des carrés.

7. Procédé de réflectométrie à onde optique polarisée selon une de la revendications 1-6, **caractérisé en ce que** l'étape de normalisation consiste, à partir de la trace d'allure exponentielle C1, d'une part à déterminer C2 la moindre exponentielle de C1 et d'autre part à déterminer S-(C1-C2)/C2, S étant les trace normalisée.

8. Procédé de réflectométrie à onde optique polarisée selon la revendication 7, **caractérisé en ce que** l'écart type de la trace normalisée (5) se calcule par la formule suivante:

$$\sqrt{\frac{1}{L}\int_0^L S^2\,dl}$$

avec L longueur de la portion de fibre optique (4) à tester.

9. Procédé de réflectométrie à onde optique polarisée selon une de la revendications 1-8, **caractérisé en ce que** ledit procédé est quantitatif sur une plage allant de 0,01 ps/km$^{1/2}$ à 0,2ps/km$^{1/2}$.

10. Systéme **caractérisé en ce qu'**il comporte plusieurs éléments reliés en série qui sont, un réflectométrie optique (1) de type dispositif OTOR, un contrôleur (2) de polarisation, une fibre optique (3) amorce dont l'extrémité libre est destinée à être reliée à une fibre optique (4) à tester, et **en ce qu'**il comporte aussi un dispositif (5) de traitement destinè à permettre, en relation avec lesdits éléments, la mise en oeuvre du procédé de réflectométrie à onde optique polarisée selon l'une quelconque des revendications précédentes.

11. Système selon la revendication 10, **caractérisé en ce que** le contrôleur (2) de polarisation est constitué soit d'un polariseur linéaire et d'une lame demi-onde si le réflectomètre optique (1) comporte une source lumineuse qui est polarisée soit d'un polariseur tournant si le réflectométre optique (1) comporte une source lumineuse qui est non polarisée.

12. Système selon la revendication 10, **caractérisé en ce que** la fibre optique (3) amorce est aussi une fibre optique de référence constituant un étalon interne pour l'estimation du coefficient de dispersion modale de polarisation (cPMD), la longueur de la fibre optique (3) amorce ainsi que le coefficient de dispersion modale de polarisation (cPMD) de la fibre optique (3) amorce étant connus.

13. Système selon la revendication 12, **caractérisé en ce que** la fibre optique (3) de référence présente une dispersion modale de polarisation globale comprise entre 0,04 et 0,06 ps/km$^{1/2}$.

14. Système selon la revendication 13, **caractérisé en ce que** la fibre optique (3) de référence présente une longueur comprise entre 2 et 4km.

**Patentansprüche**

1. Verfahren zur Reflektometrie mit polarisierter Lichtwelle, das nacheinander zumindest Folgendes umfasst:

einen Schritt zum Senden mehrerer polarisierter optischer Signale, die sich voneinander unterscheiden, in eine zu prüfende Lichtleitfaser (4); einen Schritt zur polarisationsempfindlichen Erfassung der durch Rückstreuung der optischen Signale erhaltenen Spuren ($T_{ref}$, $T_{fut}$, C1); einen Normalisierungsschritt für jede der Spuren ($T_{ref}$, $T_{fut}$, C1); einen Berechnungsschritt für jede der Spuren der Standardabweichung von der normalisierten Spur (S) zumindest auf einem Abschnitt der zu prüfenden Lichtleitfaser, wobei das Ergebnis als relatives Rauschen der Spur bezeichnet wird; einen Berechnungsschritt mittels einer Funktion der Art gewichtetes Mittel zwischen den im vorhergehenden Schritt erhaltenen relativen Rauschwerten, wobei die daraus resultierende mittlere Standardabweichung als relatives Gesamtrauschen (BRG) bezeichnet wird; einen Schritt zur Schätzung des Polarisationsmodendispersionskoeffizienten (cPMD) ausgehend von dem relativen Gesamtrauschen (BRG) über eine Funktion des Schätzungsschritts, wobei diese Funktion aus einer linearen Kombination aus einer oder mehreren Exponentialfunktionen der Form exp (a + bP + cP $^{-1}$) besteht, die Koeffizienten a, b, c für jede Exponentialfunktion fest sind aber von Exponentialfunktion zu Exponentialfunktion variieren können und P ein Skalarparameter ist;

wobei die Darstellungen der optischen Signale auf der Poincaré-Kugel voneinander unabhängig sind, was einen konstanten Wert des relativen Gesamtrauschens (BRG) gewährleistet und somit dazu führt, dass die Genauigkeit der Schätzung des Polarisationsmodendispersionskoeffizienten (cPMD) von der Polarisationsdrehung unabhängig ist, die die optischen Signale bei ihrer Hin- und Herbewegung in der zu prüfenden Lichtleitfaser (4) erfahren können.

2. Verfahren zur Reflektometrie mit polarisierter Lichtwelle nach Anspruch 1, **dadurch gekennzeichnet, dass** zwei optische Signale vorhanden sind.

3. Verfahren zur Reflektometrie mit polarisierter Lichtwelle nach Anspruch 1 oder 2, **dadurch gekennzeichnet, dass** die optischen Signale linear polarisiert sind.

4. Verfahren zur Reflektometrie mit polarisierter Lichtwelle nach Anspruch 3, **dadurch gekennzeichnet, dass**

zwei optische Signale vorhanden sind;
die Winkelverschiebung zwischen den beiden linear polarisierten optischen Signalen ausreichend nah bei 45 ° liegt, so dass der geschätzte Polarisationsmodendispersionskoeffizient (cPMD) von einer möglichen Polarisationsdrehung in der zu prüfenden Lichtleitfaser (4) unabhängig bleibt.

5. Verfahren zur Reflektometrie mit polarisierter Lichtwelle nach einem der Ansprüche 1 bis 4, **dadurch gekennzeichnet, dass** die Funktion des Schätzungsschritts folgende ist:

$$exp\left(A + \frac{B}{BRG}\right)$$

wobei BRG das relative Gesamtrauschen, A ein fester Koeffizient zwischen -6 und -3 und B ein fester Koeffizient zwischen 0,001 und 0,2 ist.

6. Verfahren zur Reflektometrie mit polarisierter Lichtwelle nach einem der Ansprüche 1 bis 5, **dadurch gekennzeichnet, dass** die Funktion der Art gewichtetes Mittel entweder das arithmetische Mittel, das geometrische Mittel oder die zweite Wurzel der Quadratsumme ist.

7. Verfahren zur Reflektometrie mit polarisierter Lichtwelle nach einem der Ansprüche 1 bis 6, **dadurch gekennzeichnet, dass** der Normalisierungsschritt darin besteht, ausgehend von der Spur mit Exponentialverlauf C1 zum einen C2, die kleinste Exponentialfunktion von C1, zu bestimmen und zum anderen S=(C1-C2)/C2 zu bestimmen, wobei S die normalisierte Spur ist.

8. Verfahren zur Reflektometrie mit polarisierter Lichtwelle nach Anspruch 7, **dadurch gekennzeichnet, dass** die Standardabweichung von der normalisierten Spur (S) mit der folgenden Formel berechnet wird:

$$\sqrt{\frac{1}{L}\int_0^L S^2 dl}$$

wobei L die Länge des zu prüfenden Abschnitts der Lichtleitfaser (4) ist.

9. Verfahren zur Reflektometrie mit polarisierter Lichtwelle nach einem der Ansprüche 1 bis 8, **dadurch gekennzeichnet, dass** das Verfahren auf einem Bereich von 0,01 ps /km$^{1/2}$ bis 0,2 ps / km$^{1/2}$ quantitativ ist.

10. System, **dadurch gekennzeichnet, dass** es mehrere in Reihe geschaltete Elemente umfasst, nämlich ein optisches Reflektometer (1) vom Typ OTDR-Vorrichtung, eine Polarisationssteuereinrichtung (2), eine Ausgangslichtleitfaser (3), deren freies Ende dazu vorgesehen ist, mit einer zu prüfenden Lichtleitfaser (4) verbunden zu werden, und dass es auch eine Verarbeitungsvorrichtung (5) aufweist, die dazu vorgesehen ist, zusammen mit den Elementen die Durchführung des Verfahrens zur Reflektometrie mit polarisierter Lichtwelle nach einem der vorhergehenden Ansprüche zu ermöglichen.

11. System nach Anspruch 10, **dadurch gekennzeichnet, dass** die Polarisationssteuereinrichtung (2) entweder aus einem Linearpolarisator und einem Halbwellenlängenplättchen besteht, wenn das optische Reflektometer (1) eine Lichtquelle aufweist, die polarisiert ist, oder aus einem Drehpolarisator, wenn das optische Reflektometer (1) eine Lichtquelle aufweist, die nicht polarisiert ist.

12. System nach Anspruch 10, **dadurch gekennzeichnet, dass** die Ausgangslichtleitfaser (3) auch eine Referenzlichtleitfaser ist, die ein internes Normalmaß für die Schätzung des Polarisationsmodendispersionskoeffizienten (cPMD) bildet, wobei die Länge der Ausgangslichtleitfaser (3) und der Polarisationsmodendispersionskoeffizient (cPMD) der Ausgangslichtleitfaser (3) bekannt sind.

13. System nach Anspruch 12, **dadurch gekennzeichnet, dass** die Referenzlichtleitfaser (3) eine Gesamtpolarisationsmodendispersion hat, die zwischen 0,04 und 0,06 ps / km$^{1/2}$ beträgt.

14. System nach Anspruch 13, **dadurch gekennzeichnet, dass** die Referenzlichtleitfaser (3) eine Länge hat, die zwischen 2 und 4 km beträgt.

## Claims

1. Polarized optical wave reflectometry method comprising successively at least:

    a step of sending in an optical fibre (4) to be tested a plurality of separate polarized optical signals;

    a step of polarization sensitive detection of the traces ($T_{ref}$, $T_{fut}$, C1) obtained by backscattering of the optical signals;

    a normalization step for each of the traces ($T_{ref}$, $T_{fut}$, C1);

    a step of calculating for each of the traces over at least a portion of the optical fibre to be tested the standard deviation of the normalized trace (S), the result being called the relative noise of the trace;

    a calculation step employing a weighted mean type function between the relative noise values obtained in the preceding step, the resulting mean standard deviation being called the overall relative noise (BRG);

    a step of estimating the polarization mode dispersion coefficient (cPMD) from the overall relative noise (BRG) by a function of the estimation step, this function being constituted of a linear combination of one or more exponentials of the form $\exp(a+bP+cP^{-1})$, the coefficients a, b, c being fixed for each exponential but being able to vary from one exponential to another, P being a scalar parameter;

    the representations of the optical signals on the Poincaré sphere are independent of each other, which will assure a constant value of the overall relative noise (BRG) thus making the accuracy of the estimated polarization mode dispersion coefficient (cPMD) independent of the rotation of polarisation that the optical signals may suffer during their round trip in the optical fibre (4) to be tested.

2. Polarized optical wave reflectometry method according to claim 1, **characterized in that** the optical signals are two in number.

3. Polarized optical wave reflectometry method according to claim 1 or 2, **characterized in that** the optical signals are linearly polarized.

4. Polarized optical wave reflectometry method according to claim 3, **characterized in that**:

    the optical signals are two in number;

    the angular offset between the two linearly polarized optical signals is sufficiently close to 45 degrees for the estimated polarization mode dispersion coefficient (cPMD) to remain independent of any rotation of polarization in the optical fibre (4) to be tested.

5. Polarized optical wave reflectometry method according to any one of claims 1 to 4, **characterized in that** the function of the estimation step is:

$$\exp\left(A + \frac{B}{BRG}\right)$$

    where BRG is the overall relative noise, A is a fixed coefficient between -6 and -3, and B is a fixed coefficient between 0.001 and 0.2.

6. Polarized optical wave reflectometry method according to any one of claims 1 to 5, **characterized in that** the weighted mean type function is the arithmetic mean, the geometric mean or the root mean square.

7. Polarized optical wave reflectometry method according to any one of claims 1 to 6, **characterized in that** the normalization step consists in, from the exponential trace C1, on the one hand determining the lowest exponential C2 from C1 and on the other hand determining S = (C1-C2)/C2, S being the normalized trace.

8. Polarized optical wave reflectometry method according to claim 7, **characterized in that** the standard deviation of the normalized trace (S) is calculated by the following formula in which L is the length of the portion of the optical fibre (4) to be tested:

$$\sqrt{\frac{1}{L}\int_{0}^{L} S^2 \, dl}$$

9. Polarized optical wave reflectometry method according to any one of claims 1 to 8, **characterized in that** said method is a quantitative method over a range of 0.01 ps/km$^{1/2}$ to 0.2 ps/km$^{1/2}$.

10. System **characterized in that** it comprises a plurality of elements connected in series, namely an OTDR device type optical reflectometer (1), a polarization controller (2), a pigtail optical fibre (3) the free end of which is intended to be connected to an optical fibre (4) to be tested, and **in that** it also includes a processing device (5) intended in conjunction with said elements to enable use of the polarized optical wave reflectometry method of any one of the preceding claims.

11. System according to claim 10, **characterized in that** the polarization controller (2) consists of either a linear polarizer and a half-wave plate if the optical reflectometer (1) includes a polarized light source or a rotating polarizer if the optical reflectometer (1) includes an unpolarized light source.

12. System according to claim 10, **characterized in that** the pigtail optical fibre (3) is also a reference optical fibre constituting an internal calibration standard for estimating the polarization mode dispersion coefficient (cPMD), the length of the pigtail optical fibre (3) and the polarization mode dispersion coefficient (cPMD) of the pigtail optical fibre (3) being known.

13. System according to claim 12, **characterized in that** the reference optical fibre (3) has an overall polarization mode dispersion between 0.04 and 0.06 ps/km$^{1/2}$.

14. System according to claim 13, **characterized in that** the reference optical fibre (3) has a length between 2 and 4 km.

FIG_1

FIG_3

FIG_4

EP 1 396 712 B1

FIG_2

FIG_5

EP 1 396 712 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2002048680 A

**Littérature non-brevet citée dans la description**

- **B. HUTTNER.** distributed PMD measurement with a polarisation-OTDR in optical fibers. *Journal of lightwave technology,* 10 Mars 1999, vol. 17, 1843-1848

- **ANDREA GALTAROSSA.** single-end polarization mode dispersion measurement using backreflected spectra through a linear polarizer. *Journal of lightwave technology,* 10 Octobre 1999